(19) Europäisches Patentamt / European Patent Office / Office européen des brevets

(11) **EP 4 780 046 A1**

(12) **EUROPEAN PATENT APPLICATION**
published in accordance with Art. 153(4) EPC

(43) Date of publication:
**22.07.2026 Bulletin 2026/30**

(21) Application number: **23951905.1**

(22) Date of filing: **15.09.2023**

(51) International Patent Classification (IPC):
*H04W 24/02* (2009.01)

(52) Cooperative Patent Classification (CPC):
**H04W 24/02**

(86) International application number:
**PCT/CN2023/119158**

(87) International publication number:
**WO 2025/054975 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **DUAN, Gaoming
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **COMMUNICATION PROCESSING METHOD AND APPARATUS**

(57) The present disclosure provides a communication processing method and apparatus, and relates to the technical field of communications. The method comprises: a network device sending first information to a terminal device, wherein the first information is used for determining configuration information corresponding to a first reference signal, and the first reference signal is a reference signal based on CDD precoding. In the present disclosure, by means of CDD precoding design, a first reference signal sending a plurality of candidate beams is precoded, and configuration information corresponding to a terminal device is issued, so that the terminal device can simultaneously receive and measure the plurality of candidate beams on the basis of the configuration information, thereby improving the feedback efficiency of candidate beam measurement, and solving the problem of the feedback time for candidate beam measurement being relatively long.

The network device sends first information to the terminal. ⟿ 301

FIG. 4

EP 4 780 046 A1

## Description

## TECHNICAL FIELD

The present disclosure relates to the field of communication technology, and specifically to a communication processing method and apparatus.

## BACKGROUND

A width of a beam is related to a scale of an antenna array and a frequency, i.e., the higher the frequency, the narrower the beam; and the larger the scale of the antenna array, the narrower the beam. This results in an extremely narrow beam for high-frequency large-scale multiple input multiple output (MIMO). Therefore, to cover the same cell, a high-frequency large-scale MIMO system requires more beams than a new radio (NR) system.

## SUMMARY

The present disclosure provides a communication processing method and apparatus, which may realize a reference signal measurement based on a cyclic delay diversity (CDD) precoding, and improves a feedback efficiency of a candidate beam measurement.

According to a first aspect of the embodiments of the present disclosure, a communication processing method is provided. The method is performed by a network device and includes: sending first information to a terminal, in which the first information is configured to determine configuration information corresponding to a first reference signal (RS), and the first RS is an RS based on a CDD precoding.

In some embodiments of the present disclosure, the configuration information further includes at least one of: a count of ports for sending the first RS; a number index respectively corresponding to one or more ports for sending the first RS; a cyclic shift of a CDD precoding respectively corresponding to one or more ports for sending the first RS; a cyclic shift ratio of a CDD precoding respectively corresponding to one or more ports for sending the first RS; or a frequency domain density of the first RS.

In some embodiments of the present disclosure, the method further includes: receiving second information sent by the terminal; determining a first CDD precoding according to the second information; and sending a signal based on the first CDD precoding to communicate with the terminal.

In some embodiments of the present disclosure, the second information includes at least one of the following determined by the terminal according to a power delay profile (PDP) measurement result of the first RS: the number index of a port whose PDP measurement result meets a preset condition; the cyclic shift of the CDD precoding of a port whose PDP measurement result meets a preset condition; or the cyclic shift ratio of the CDD precoding of a port whose PDP measurement result meets a preset condition.

In some embodiments of the present disclosure, the second information further includes a delay power value corresponding to the port whose PDP measurement result meets the preset condition.

In some embodiments of the present disclosure, the second information includes at least one of: the number index respectively corresponding to one or more ports for sending the first RS and a corresponding PDP measurement result; the cyclic shift of the CDD precoding respectively corresponding to one or more ports for sending the first RS and a corresponding PDP measurement result; and the cyclic shift ratio of the CDD precoding respectively corresponding to one or more ports for sending the first RS and a corresponding PDP measurement result.

In some embodiments of the present disclosure, the second information further includes a delay power value respectively corresponding to one or more ports for sending the first RS.

In some embodiments of the present disclosure, determining the first CDD precoding according to the second information includes at least one of: determining the number index of a port corresponding to the first CDD precoding; determining the cyclic shift of the CDD precoding of a port corresponding to the first CDD precoding; or determining the cyclic shift ratio of the CDD precoding of a port corresponding to the first CDD precoding.

In some embodiments of the present disclosure, the CDD precoding of the first RS is determined according to a second CDD precoding of a subcarrier at a frequency where the first RS is located.

In some embodiments of the present disclosure, the second CDD precoding satisfies:

$$w_i^{CDD}(k) = e^{-j2\pi m_{cs}^k i}$$

, in which $w_i^{CDD}(k)$ represents a CDD precoding of an i-th subcarrier on a k-th port, $m_{cs}^k$ represents a cyclic shift ratio of the CDD precoding of the k-th port, and $m_{cs}^k < \frac{1}{\Delta i}$, where j represents a plural unit, $j = \sqrt{-1}$, and $\Delta i$ represents a frequency domain density of the first RS.

In some embodiments of the present disclosure, the second CDD precoding satisfies:

$$w_i^{CDD}(k) = e^{-j\frac{2\pi}{N_{FFT}}n_{cs}^k i}$$

, in which $w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \frac{N_{FFT}}{\Delta i}$, where j represents a plural unit,

$$j = \sqrt{-1}$$

, and $\Delta i$ represents a frequency domain density of the first RS.

In some embodiments of the present disclosure, the first information is carried in at least one of: a radio resource control (RRC) message; a media access control element (MAC CE); or downlink control information (DCI).

According to a second aspect of the embodiments of the present disclosure, a communication processing method is provided. The method is performed by a terminal and includes: receiving first information sent by a network device; and determining configuration information corresponding to a first RS according to the first information, in which the first RS is an RS based on a CDD precoding.

In some embodiments of the present disclosure, the configuration information includes at least one of: a count of ports for sending the first RS; a number index respectively corresponding to one or more ports for sending the first RS; a cyclic shift of a CDD precoding respectively corresponding to one or more ports for sending the first RS; a cyclic shift ratio of a CDD precoding respectively corresponding to one or more ports for sending the first RS; or a frequency domain density of the first RS.

In some embodiments of the present disclosure, the method further includes: sending second information to the network device, in which the second information is configured to determine a first CDD precoding; and receiving a signal sent by the network device based on the first CDD precoding.

In some embodiments of the present disclosure, the second information includes at least one of the following determined by the terminal according to a PDP measurement result of the first RS: the number index of a port whose PDP measurement result meets a preset condition; the cyclic shift of the CDD precoding of a port whose PDP measurement result meets a preset condition; or the cyclic shift ratio of the CDD precoding of a port whose PDP measurement result meets a preset condition.

In some embodiments of the present disclosure, the second information further includes a delay power value corresponding to the port whose PDP measurement result meets the preset condition.

In some embodiments of the present disclosure, the second information includes at least one of: the number index respectively corresponding to one or more ports for sending the first RS and a corresponding PDP measurement result; the cyclic shift of the CDD precoding respectively corresponding to one or more ports for sending the first RS and a corresponding PDP measurement result; and the cyclic shift ratio of the CDD precoding respectively corresponding to one or more ports for sending the first RS and a corresponding PDP measurement result.

In some embodiments of the present disclosure, the second information further includes a delay power value respectively corresponding to one or more ports for sending the first RS.

**In** some embodiments of the present disclosure, the first CDD precoding includes at least one of: the number index of a port corresponding to the first CDD precoding; the cyclic shift of the CDD precoding of a port corresponding to the first CDD precoding; or the cyclic shift ratio of the CDD precoding of a port corresponding to the first CDD precoding.

In some embodiments of the present disclosure, the CDD precoding of the first RS is determined according to a second CDD precoding of a subcarrier at a frequency where the first RS is located.

In some embodiments of the present disclosure, the second CDD precoding satisfies:

$$w_i^{CDD}(k) = e^{-j2\pi m_{cs}^k i}$$

, in which $w_i^{CDD}(k)$ represents a CDD precoding of an i-th subcarrier on a k-th port, $m_{cs}^k$ represents a cyclic shift ratio of the CDD precoding of the k-th port, and $m_{cs}^k < \dfrac{1}{\Delta i}$, where $j = \sqrt{-1}$, and $\Delta i$ represents a frequency domain density of the first RS.

In some embodiments of the present disclosure, the second CDD precoding satisfies:

$$w_i^{CDD}(k) = e^{-j\frac{2\pi}{N_{FFT}}n_{cs}^k i}$$

, in which $w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \dfrac{N_{FFT}}{\Delta i}$, where $j = \sqrt{-1}$, and $\Delta i$ represents a frequency domain density of the first RS.

In some embodiments of the present disclosure, the first information is carried in at least one of: an RRC message; an MAC CE; or DCI.

According to a third aspect of the embodiments of the present disclosure, a network device is provided, including: a sending module, configured to send first information to a terminal, in which the first information is configured to determine configuration information corresponding to a first RS, and the first RS is an RS based on a CDD precoding.

According to a fourth aspect of the embodiments of the present disclosure, a terminal is provided, including: a receiving module, configured to receive first information sent by a network device; and determine configuration information corresponding to a first RS according to the first information, in which the first RS is an RS based on a CDD precoding.

According to a fifth aspect of the embodiments of the present disclosure, a communication processing system is provided, including: a network device and a terminal, in which the network device performs the method as described in the embodiments of the first aspect, and the terminal performs the method as described in the embodiments of the second aspect.

According to a sixth aspect of the embodiments of the present disclosure, a communication device is provided, including: a transceiver; a memory; and a processor connected to the transceiver and the memory respectively, and configured to control wireless signal transmission and reception of the transceiver by executing computer-executable instructions on the memory, and implement the method as described in the embodiments of the first aspect, or the method as described in the embodiments of the second aspect.

According to a seventh aspect of the embodiments of the present disclosure, a computer storage medium for storing computer-executable instructions is provided. After the computer-executable instructions are executed by a processor, the method as described in the embodiments of the first aspect, or the method as described in the embodiments of the second aspect may be implemented.

The embodiments of the present disclosure provide a communication processing method and apparatus. The network device sends the first information to the terminal. The first information is configured to determine the configuration information corresponding to the first RS, and the first RS is an RS based on a CDD precoding. In the embodiments, via a CDD precoding design, the first RS for sending a plurality of candidate beams is precoded, and corresponding configuration information is delivered to the terminal, so that the terminal may simultaneously receive and measure a plurality of candidate beams according to the configuration information, which improves the feedback efficiency of the candidate beam measurement and solves a problem of a long feedback time of the candidate beam measurement

Additional aspects and advantages of the embodiments of present disclosure will be given in part in the following descriptions, become apparent in part from the following descriptions, or be learned from the practice of the embodiments of the present disclosure.

## BRIEF DESCRIPTION OF THE DRAWINGS

The above and/or other aspects and advantages of embodiments of the present disclosure will become apparent and more readily appreciated from the following descriptions made with reference to the accompanying drawings.

FIG. 1 is a schematic diagram of a communication processing system according to the embodiments of the present disclosure.
FIG. 2 is a timing diagram of a communication processing method according to the embodiments of the present disclosure.
FIG. 3 is a flowchart of a communication processing method according to the embodiments of the present disclosure.
FIG. 4 is a flowchart of a communication processing method according to the embodiments of the present disclosure.
FIG. 5 is a flowchart of a communication processing method according to the embodiments of the present disclosure.
FIG. 6 is a block diagram of a network device according to the embodiments of the present disclosure.
FIG. 7 is a block diagram of a terminal according to the embodiments of the present disclosure.
FIG. 8 is a schematic diagram of a communication apparatus according to the embodiments of the present disclosure.
FIG. 9 is a schematic diagram of a chip according to the embodiments of the present disclosure.

## DETAILED DESCRIPTION

The embodiments of the present disclosure are described in detail below. Examples of the embodiments are shown in the accompanying drawings, throughout which the same or similar labels represent the same or similar elements or elements having the same or similar functions. The embodiments below with reference to the accompanying drawings are exemplary and are intended to explain the present disclosure, but should not be construed as a limitation to the present disclosure. It needs to be noted that the embodiments of the present disclosure and the features in the embodiments may be combined with each other in the case of no conflict.

The embodiments of the present disclosure provide a communication processing method. In some embodiments, the communication processing method may be interchanged with terms such as information processing method and communication method; the communication processing apparatus may be interchanged with terms such as information processing apparatus and communication apparatus; and the communication processing system may be interchanged with terms such as information processing system and communication system.

The embodiments of the present disclosure are not exhaustive and only serve as illustrations of some embodiments, but not as specific limitations to the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in the embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus" may be interpreted as either physical or virtual. Names are not limited to those recorded in the embodiments. The terms such as "apparatus", "equipment", "device", "circuit", "network element", "node", "function", "unit", "section", "system", "network", "chip", "chip system", "entity", "subject", etc. may be used interchangeably.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, "acquire", "obtain", "get", "receive", "transmit", "bidirectional transmission", "send and/or receive" may be used interchangeably, and they may be interpreted as receiving from another entity, obtaining from a protocol, obtaining via processing by itself, autonomously implementing, and other meanings.

In some embodiments, terms such as "send", "report", "deliver", "transmit", "bidirectional transmission", "send and/or receive" may be used interchangeably.

In some embodiments, "predetermined" or "preset" may be interpreted as pre-defined in a protocol, or performing a preset action by an apparatus.

In some embodiments, determining may be interpreted as estimating, deciding, judging, calculating, computing, processing, deriving, investigating, searching, looking up, retrieving, inquiring, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, assigning, etc., which is not limited herein.

In some embodiments, determination or judgment may be performed using a value represented by 1 bit (0 or 1), or using boolean values represented by true or false, or by numerical comparison (e.g., comparison with a predetermined value), which is not limited herein.

In some embodiments, "network" may be interpreted as a device included in a network (e.g., an access network device, a core network device, etc.).

In some embodiments, "does not expect to receive" may be interpreted as not receiving on a time-domain resource and/or a frequency-domain resource, or as not performing subsequent processing on received data after receiving the data; and "does not expect to send" may be interpreted as not sending, or as sending but not expecting a receiver to respond to content that is sent.

In some embodiments, obtaining data, information, etc. shall comply with laws and regulations of a country where it is located.

In some embodiments, data, information, etc. may be obtained after agreed by a user.

In some embodiments, a threshold mentioned in the embodiments may be numerical values, constants, or some fixed values, etc.

In addition, each element, each row, or each column in tables of embodiments of the present disclosure may be implemented as an independent embodiment. Any combination of elements, rows, or columns may also be implemented as an independent embodiment.

With continuous development of wireless communication, requirements for a communication capability are increasing. For future application scenarios such as augmented reality (AR)/virtual reality (VR), vehicle to everything (V2X), Internet of Things (IoT), holographic communication, ultra-high definition video transmission, etc., communication with an ultra-high speed, an ultra-low latency, and an ultra-large bandwidth will become a norm. Bandwidths of the existing frequency range 1 (FR1) and FR2 are limited and may not support above services. Therefore, a higher frequency band needs to be used, such as sub-THz, THz, and other frequency bands. According to an electromagnetic wave spatial pathloss model, free space pathloss with a high frequency is higher, and the same transmit power results in a shorter radiation distance. Therefore, large-scale multiple input multiple output (MIMO) beamforming is needed to solve a problem of short transmission distance.

A width of a beam is related to a scale and a frequency of an antenna array, i.e., the higher the frequency is, the narrower the beam is; and the larger the scale of the antenna array is, the narrower the beam is. This results in an extremely narrow beam for high-frequency large-scale MIMO. Therefore, to cover the same cell, a high-frequency large-scale MIMO system requires more beams than a new radio (NR) system. At the same time, due to a larger near-field range of the high-frequency large-scale MIMO system, a near-field beam is not only related to an angle but also to a distance. Therefore, there are more near-field beams. Moreover, because a high-frequency electromagnetic wave has poor reflection and diffraction capabilities, it is generally considered that there is only a line of sight (LOS).

A beam formed by the high-frequency large-scale MIMO system via beamforming has almost no side lobes, and it may be considered that there is no multipath effect, and a channel correlation is low. Therefore, spatial isolation between beams is good. Spatial division multiplexing (SDM) may effectively improve its spectral efficiency, which is also one of main multiplexing methods of the high-frequency large-scale MIMO system.

However, a terahertz frequency band is relatively high. If the MIMO beamforming is used, its beam will become extremely narrow, and a coverage range and angle of a single beam are very small. As users move, frequent beam switching will inevitably occur. Therefore, frequent beam measurement is required during a beam tracking phase. If the beams in a candidate beam set are measured one by one according to an existing scheme, a time required to complete one round of measurement is long. Moreover, because the terminal is continuously moving, it may happen that a current working beam has already failed before candidate beam set measurement is completed. This will cause the terminal to consider a beam failure and need to re-initiate a random access. Therefore, a fast beam measurement method is needed, which may enable the terminal to complete measurements of all candidate beam sets in a short time so as to complete the beam switching in time.

For this purpose, the embodiments provide a communication processing method and apparatus to solve the above technical problem. Via a CDD precoding design, a first reference signal (RS) for sending a plurality of candidate beams is precoded, and corresponding configuration information is delivered to the terminal, so that the terminal may simultaneously receive and measure a plurality of candidate beams according to the configuration information, which thus improves a feedback efficiency of a candidate beam measurement.

The communication processing method and apparatus provided by the present disclosure are described in detail below in combination with accompanying drawings.

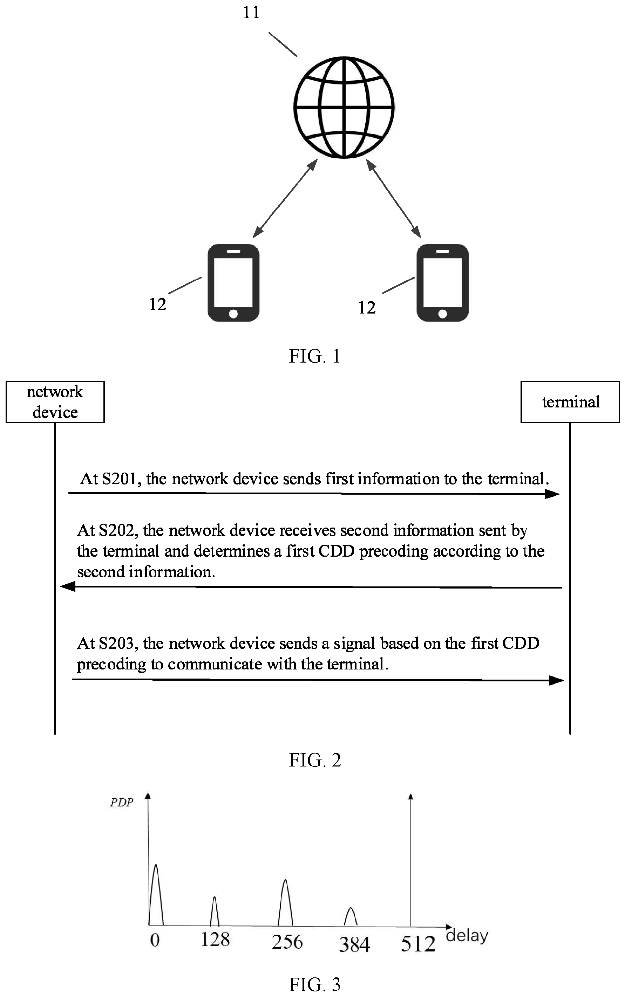

FIG. 1 is a schematic diagram of a communication processing system according to the embodiments of the present disclosure. As shown in FIG. 1, the system architecture may include a network device 11 and a terminal 12.

In some examples, the network device 11 may be an entity on a network side for sending or receiving signals. For example, the network device 11 may be a communication satellite, an evolved NodeB (eNB), a transmission reception point (TRP), a next generation NodeB (gNB) in an NR system, a base station in other mobile communication system in the future, or an access node in a wireless fidelity (WiFi) system. The embodiments of the present disclosure do not limit a specific technology and a specific device form used by the network device 11. The network device 11 provided by the embodiments of the disclosure may be composed of a central unit (CU) and distributed units (DUs). The CU may also be referred to as a control unit. The use of CU-DU structure allows to divide the network device, such as protocol layers of the base station, such that some of the protocol layer functions are placed in the CU for centralized control, and some or all of the remaining protocol layer functions are distributed in the DUs, and the DUs are centrally controlled by the CU.

In some examples, the terminal 12 may be called a terminal, a UE, a mobile station (MS), a mobile terminal (MT), etc. The terminal 12 may be a car with a communication function, a smart car, a mobile phone, a wearable device, a Pad, a computer with a wireless receiving and sending function, a VR device, an AR device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the present disclosure do not limit a specific technology and a specific device form used by the terminal 12.

It may be understood that the communication processing system in the embodiments of the disclosure is to more clearly explain the technical solutions of the embodiments of the disclosure, and does not constitute a limitation on the technical solutions in the embodiments of the disclosure. Those skilled in the art know that with evolution of the system architecture and emergence of new service scenarios, the technical solution in the embodiments of the disclosure is equally applicable to similar technical problems.

The following embodiments of the present disclosure may be applied to the communication processing system shown in FIG. 1, or to some entities, which are not limited herein. Entities in FIG. 1 are illustrative. The communication processing system may include all or some of the entities in FIG. 1, or may include other entities not shown in FIG. 1. The entities may be in any number and in any form. Connection relationships between the entities are illustrative. The entities may be unconnected or may be connected. They may be connected in any manner, for example, they may be directly connected or indirectly connected, or may be connected via a wired or wireless way.

The embodiments of the present disclosure may be applied to satellite communication, long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G NR, future radio access (FRA), new-radio access technology (RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, IoT system, V2X, systems using other communication methods, next-generation systems based on them, etc. In addition, the combination of a plurality of systems (e.g., the combination of LTE or LTE-A with 5G) may be applied.

In some examples, the network device 11 sends first information to the terminal 12. The terminal 12 receives the first information sent by the network device 11 and determines configuration information corresponding to a first RS according to the first information. The first RS is an RS based on a cyclic delay diversity (CDD) precoding, and the first RS is configured to measure a plurality of candidate beams. In the embodiments, via the CDD precoding design, the first RS for sending the plurality of candidate beams is precoded. The terminal 12 may simultaneously receive and measure the plurality of candidate beams according to the configuration information, which improves the feedback efficiency of the candidate beam measurement and solves a problem of a long feedback time for the candidate beam measurement.

Further, to illustrate a specific execution process of the above communication processing system, FIG. 2 is a timing diagram of a communication processing method according to the embodiments of the present disclosure. The method is applied to the above communication processing system. As shown in FIG. 2, the method may include the following steps at S201 to S203.

At S201, the network device sends first information to the terminal.

In some embodiments, the terminal may receive the first information sent by the network device.

The first information may be configured to determine configuration information corresponding to a first RS, and the first RS is an RS based on a CDD precoding.

For example, the network device may send the first RS corresponding to a plurality of candidate beams to the terminal via a plurality of RS ports (hereinafter referred to as ports). The first RS is the RS based on the CDD precoding. Different cyclic shifts are adopted for signals transmitted on different ports. The first RS may be configured to measure the plurality of candidate beams, and then a target port meeting a requirement may be selected from these ports and fed back to the network device, so that the network device may use CDD precoding information corresponding to the target port (i.e., use a cyclic shift corresponding to the target port) to perform the CDD precoding on the signal to be sent to the terminal, so as to achieve communication with the terminal. Thus, in this embodiment, via the CDD precoding design, a multi-beam transmission at a sending end may be realized, and a receiving end may simultaneously receive and measure a plurality of beams, which improves the feedback efficiency of the candidate beam measurement.

A process of precoding the first RS via the CDD precoding design is specifically introduced below.

In some embodiments, the CDD precoding of the first RS may be determined according to a second CDD precoding of a subcarrier at a frequency where the first RS is located. The second CDD precoding may include at least one of: a number index respectively corresponding to one or more ports corresponding to the second CDD precoding; a cyclic shift of a CDD precoding respectively corresponding to one or more ports corresponding to the second CDD precoding; or a cyclic shift ratio of a CDD precoding respectively corresponding to one or more ports corresponding to the second CDD precoding.

The second CDD precoding may have various specific optional forms. As an optional form, the second CDD precoding may be represented by the following formula (1):

$$w_i^{CDD}(k) = e^{-j2\pi m_{cs}^k i} \quad (1)$$

$w_i^{CDD}(k)$ represents a CDD precoding of an i-th subcarrier on a k-th port, $m_{cs}^k$ represents a cyclic shift ratio of the CDD precoding of the k-th port, and $m_{cs}^k < \frac{1}{\Delta i}$, where j represents a plural unit, $j = \sqrt{-1}$, and $\Delta i$ represents a frequency domain density of the first RS, i.e., a RS frequency domain subcarrier density/interval, $\Delta i = [1,2,3...]$.

As another optional way, the second CDD precoding may also be represented by the following formula (2):

$$w_i^{CDD}(k) = e^{-j\frac{2\pi}{N_{FFT}} n_{cs}^k i} \quad (2)$$

$w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \frac{N_{FFT}}{\Delta i}$, where j represents a plural unit, $j = \sqrt{-1}$, and $\Delta i$ represents a frequency domain density of the first RS.

For example, considering an orthogonal frequency division multiplexing (OFDM) symbol in a time domain, based on the first RS based on the CDD precoding, taking $S_i$ as a transmit signal on the i-th subcarrier, $S_i$ may be specifically represented by the following formula:

$$S_i = W g W_i^{CDD} g r(i)$$

$S_i$ represents the transmit signal on the i-th subcarrier, $W$ represents a precoding corresponding to each port in a spatial domain, $W = [w_1\ w_2\ L\ w_K]$, K represents a count of ports used by the network device to send the first RS, $K = [1,2,3.....]$, $r(i)$ represents an RS modulation symbol mapped to the i-th subcarrier, and

$W_i^{CDD}$ represents the CDD precoding of the i-th subcarrier, configured to implement a phase shift for each subcarrier. $W_i^{CDD}$ may be represented by the following formula:

$$W_i^{CDD} = \left[ w_i^{CDD}(1) \quad w_i^{CDD}(2) \quad L \quad w_i^{CDD}(K) \right]^T$$

$w_i^{CDD}(k)$ represents the CDD precoding of the i-th subcarrier on the k-th port, and its specific expression form may be as shown in the above formula (1) or formula (2).

Based on the above CDD precoding process, the network device needs to indicate the configuration information of the first RS to the terminal. The configuration information may be configured for the terminal to determine all port information used by the network device to send the first RS. In this way, the terminal may subsequently simultaneously receive and measure the plurality of candidate beams according to the configuration information, which improves the feedback efficiency of the candidate beam measurement. For example, the terminal may determine target port information whose power delay profile (PDP) measurement result meets a requirement (e.g., maximum PDP) from the port information according to the PDP measurement result of the first RS, and then feed back the target port information to the network device, so that the network device may use the CDD precoding information corresponding to the target port information to perform the CDD precoding on the signal to be sent to the terminal, so as to achieve communication with the terminal.

In some embodiments, the configuration information includes at least one of:

A. a count of ports for sending the first RS, such as K mentioned in the above CDD precoding process, i.e., a number of all ports used by the network device to send the first RS;

B. a number index respectively corresponding to one or more ports for sending the first RS, such as k mentioned in the above CDD precoding process, i.e., an index identifier respectively corresponding to one or more ports used by the network device to send the first RS;

C. a cyclic shift of a CDD precoding respectively corresponding to one or more ports for sending the first RS, such as $m_{cs}^{k}$ mentioned in the above CDD precoding process, i.e., the cyclic shift of the CDD precoding respectively corresponding to one or more ports used by the network device to send the first RS;

D. a cyclic shift ratio of a CDD precoding respectively corresponding to one or more ports for sending the first RS, such as $n_{cs}^{k}$ mentioned in the above CDD precoding process, i.e., the cyclic shift ratio of the CDD precoding respectively corresponding to one or more ports used by the network device to send the first RS; or

E. resource configuration information of the first RS, including related scheduling information of the RS. The terminal may receive and measure the first RS via the resource configuration information. In some embodiments, the resource configuration information at least includes: a frequency-domain density of the first RS, such as $\Delta i$ mentioned in the above CDD precoding process.

In some embodiments, the first information may be a type of communication information, such as indication information or a configuration message. For example, the first information may be carried in at least one of: a radio resource control (RRC) message; a media access control element (MAC CE); or downlink control information (DCI).

For example, the network device sends the first information to the terminal via an RRC signaling, a MAC CE signaling, or a DCI signaling, so as to indicate the configuration information of the first RS.

At S202, the network device receives second information sent by the terminal and determines a first CDD precoding according to the second information.

The second information may be configured to determine the first CDD precoding corresponding to the transmit signal, i.e., the network device may use the first CDD precoding to perform the CDD precoding on the signal to be sent to the terminal.

In some embodiments, the second information includes at least one of the following determined by the terminal according to a PDP measurement result of the first RS: the number index of a port whose PDP measurement result meets a preset condition; the cyclic shift of the CDD precoding of a port whose PDP measurement result meets a preset condition; or the cyclic shift ratio of the CDD precoding of a port whose PDP measurement result meets a preset condition.

For example, a port with a PDP measurement result greater than a certain threshold may be regarded as the port whose PDP measurement result meets the preset condition, or a port with the maximum PDP may be selected as the port whose PDP measurement result meets the preset condition, and so on.

For this embodiment, the port in the second information fed back by the terminal may be a target port that meets a requirement (e.g., maximum PDP) selected from all port information included in the configuration information based on the PDP measurement result of the first RS. The number index and/or cyclic shift and/or cyclic shift ratio of the target port are fed back to the network device, which enables the network device to use the CDD precoding corresponding to the target port (i.e., use the cyclic shift corresponding to the target port) to perform the CDD precoding on the signal to be sent to the terminal for communication with the terminal.

For example, a count of ports corresponding to the first RS meets $K = 4$, namely RS port 1, RS port 2, RS port 3, and RS port 4, respectively. The frequency domain density of the first RS meets $\Delta i$ - 2 , the count of Fourier sampling points $N_{FFT}=1024$ , and the cyclic shifts corresponding to the 4 ports are

$$n_{cs}^{k} = \begin{bmatrix} 0 & 128 & 256 & 384 \end{bmatrix}$$

respectively. In this scenario, the terminal calculates the PDP measurement result of the first RS, as specifically shown in FIG. 3, which is a schematic diagram of delay power distribution. According to the schematic diagram of the delay power distribution shown in FIG. 3, the terminal may determine that when $n_{cs}^{k} = 0$ , the PDP is maximum. Therefore, relevant information of the RS port 1 may be sent to the network device, including the number index and/or cyclic shift and/or cyclic shift ratio of the RS port 1, etc., so that the network device may use the CDD precoding corresponding to the RS port 1 (i.e., use the cyclic shift corresponding to the RS port 1) to perform the CDD precoding on the signal to be sent to the terminal for communication with the terminal.

In some embodiments, the second information also includes a delay power value corresponding to the port whose PDP measurement result meets the preset condition, which enables the network device to comprehensively analyze whether to select the CDD precoding corresponding to the target port fed back by the terminal.

In some embodiments, the second information includes at least one of: the number index respectively corresponding to one or more ports for sending the first RS and a corresponding PDP measurement result; the cyclic shift of the CDD precoding respectively corresponding to one or more ports for sending the first RS and a corresponding PDP measurement result; and the cyclic shift ratio of the CDD precoding respectively corresponding to one or more ports for sending the first RS and a corresponding PDP measurement result.

In some embodiments, the second information may also include a delay power value respectively corresponding to one or more ports for sending the first RS.

For example, the terminal may feed back number indexes of all ports and PDP measurement results respectively corresponding to the number indexes to the network device, and the network device selects the CDD precoding corresponding to which port to use. In addition, delay power values respectively corresponding to all ports may also be fed back, which enables the network device to conduct a comprehensive analysis.

For another example, the terminal may also only feed back the number index of the target port whose PDP measurement result meets the requirement (e.g., maximum PDP) to the network device, and the network device decides whether to use the CDD precoding information corresponding to the target port. In addition, the delay power value corresponding to the target port may also be fed back, which enables the network device to conduct the comprehensive analysis.

In a process that the network device decides which CDD precoding information to specifically use, a comprehensive judgment may be made based on the second information reported and fed back by the terminal, and then the first CDD precoding corresponding to the transmit signal is determined, i.e., use the first CDD precoding to perform the CDD precoding on a subsequent signal to be sent to the terminal.

In some embodiments, determining the first CDD precoding according to the second information includes at least one of:

a. determining the number index of a port corresponding to the first CDD precoding;

b. determining the cyclic shift of the CDD precoding of a port corresponding to the first CDD precoding; or

c. determining the cyclic shift ratio of the CDD precoding of a port corresponding to the first CDD precoding.

For example, according to the number index and/or cyclic shift and/or cyclic shift ratio of a port M corresponding to the first CDD precoding, the network device uses the CDD precoding corresponding to the port M (i.e., uses the cyclic shift corresponding to the port M) to perform the CDD precoding on the signal to be sent to the terminal, thereby implementing communication with the terminal, i.e., performing the process shown in step 203.

At S203, the network device sends a signal based on the first CDD precoding to communicate with the terminal.

In this embodiment, via the CDD precoding design, the first RS for sending the plurality of candidate beams is precoded, and corresponding configuration information is delivered to the terminal, so that the terminal may simultaneously receive and measure a plurality of candidate beams according to the configuration information, which improves the feedback efficiency of candidate beam measurement and solves the problem of the long feedback time of the candidate beam measurement.

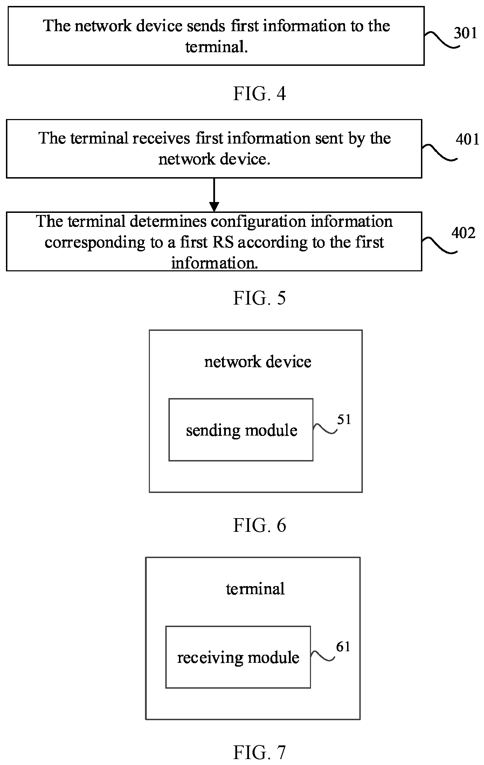

To illustrate a specific execution process of the network device, FIG. 4 shows a flowchart of a communication processing method according to the embodiments of the present disclosure, applied to a network device side for execution. The communication processing method may include the following step at S301.

At S301, a network device sends first information to a terminal.

The first information is configured to determine configuration information corresponding to a first RS, and the first RS is an RS based on a CDD precoding.

In some embodiments of the present disclosure, the configuration information further includes at least one of: a count of ports for sending the first RS; a number index respectively corresponding to one or more ports for sending the first RS; a cyclic shift of a CDD precoding respectively corresponding to one or more ports for sending the first RS; a cyclic shift ratio of a CDD precoding respectively corresponding to one or more ports for sending the first RS; or a frequency domain density of the first RS.

In some embodiments of the present disclosure, after sending the first information to the terminal, the method further includes: receiving second information sent by the terminal; determining a first CDD precoding according to the second information; and sending a signal based on the first CDD precoding to communicate with the terminal.

In some embodiments of the present disclosure, the second information includes at least one of the following determined by the terminal according to a PDP measurement result of the first RS: the number index of a port whose PDP measurement result meets a preset condition; the cyclic shift of the CDD precoding of a port whose PDP measurement result meets a preset condition; or the cyclic shift ratio of the CDD precoding of a port whose PDP measurement result meets a preset condition.

In some embodiments of the present disclosure, the second information further includes a delay power value corresponding to the port whose PDP measurement result meets the preset condition.

In some embodiments of the present disclosure, the second information includes at least one of: the number index respectively corresponding to one or more ports for sending the first RS and a corresponding PDP measurement result; the cyclic shift of the CDD precoding respectively corresponding to one or more ports for sending the first RS and a corresponding PDP measurement result; and the cyclic shift ratio of the CDD precoding respectively corresponding to one or more ports for sending the first RS and a corresponding PDP measurement result.

In some embodiments of the present disclosure, the second information further includes a delay power value respectively corresponding to one or more ports for sending the first RS.

In some embodiments of the present disclosure, determining the first CDD precoding according to the second information includes at least one of: determining the number index of a port corresponding to the first CDD precoding; determining the cyclic shift of the CDD precoding of a port corresponding to the first CDD precoding; or determining the cyclic shift ratio of the CDD precoding of a port corresponding to the first CDD precoding.

In some embodiments of the present disclosure, the CDD precoding of the first RS is determined according to a second CDD precoding of a subcarrier at a frequency where the first RS is located.

In some embodiments of the present disclosure, the second CDD precoding satisfies:

$$w_i^{CDD}(k) = e^{-j2\pi m_{cs}^k i},$$

wherein $w_i^{CDD}(k)$ represents a CDD precoding of an i-th subcarrier on a k-th port, $m_{cs}^k$ represents a cyclic shift ratio of the CDD precoding of the k-th port, and $m_{cs}^k < \dfrac{1}{\Delta i}$, where j represents a plural unit, $j = \sqrt{-1}$, and $\Delta i$ represents a frequency domain density of the first RS.

In some embodiments of the present disclosure, the second CDD precoding satisfies:

$$w_i^{CDD}(k) = e^{-j\frac{2\pi}{N_{FFT}} n_{cs}^k i},$$

wherein $w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \dfrac{N_{FFT}}{\Delta i}$, where j represents a plural unit, $j = \sqrt{-1}$, and $\Delta i$ represents a frequency domain density of the first RS.

In some embodiments of the present disclosure, the first information is carried in at least one of: an RRC message; an MAC CE; or DCI.

For descriptions of specific examples in the embodiments reference may be made to the corresponding descriptions in the embodiments of FIG. 1 to FIG. 3, and details are not repeated here.

In this embodiment, via the CDD precoding design, the first RS for sending the plurality of candidate beams is precoded, and corresponding configuration information is delivered to the terminal, so that the terminal may simultaneously receive and measure a plurality of candidate beams according to the configuration information, which improves the feedback efficiency of candidate beam measurement and solves the problem of the long feedback time of the candidate beam measurement.

FIG. 5 shows a flowchart of a communication processing method according to the embodiments of the present disclosure. As shown in FIG. 5, the method is applied to a terminal side for execution and may include the following steps at S401 to S402.

At S401, a terminal receives first information sent by a network device.

At S402, the terminal determines configuration information corresponding to a first RS according to the first information.

The first RS is an RS based on a CDD precoding.

In some embodiments of the present disclosure, the configuration information further includes at least one of: a count of ports for sending the first RS; a number index respectively corresponding to one or more ports for sending the first RS; a cyclic shift of a CDD precoding respectively corresponding to one or more ports for sending the first RS; a cyclic shift ratio of a CDD precoding respectively corresponding to one or more ports for sending the first RS; or a frequency domain density of the first RS.

In some embodiments of the present disclosure, the method further includes: sending second information to the network device, in which the second information is configured to determine a first CDD precoding; and receiving a signal sent by the network device based on the first CDD precoding.

In some embodiments of the present disclosure, the second information includes at least one of the following determined by the terminal according to a PDP measurement result of the first RS: the number index of a port whose PDP measurement result meets a preset condition; the cyclic shift of the CDD precoding of a port whose PDP measurement result meets a preset condition; or the cyclic shift ratio of the CDD precoding of a port whose PDP measurement result meets a preset condition.

In some embodiments of the present disclosure, the second information further includes a delay power value corresponding to the port whose PDP measurement result meets the preset condition.

In some embodiments of the present disclosure, the second information includes at least one of: the number index respectively corresponding to one or more ports for sending the first RS and a corresponding PDP measurement result; the cyclic shift of the CDD precoding respectively corresponding to one or more ports for sending the first RS and a corresponding PDP measurement result; and the cyclic shift ratio of the CDD precoding respectively corresponding to one or more ports for sending the first RS and a corresponding PDP measurement result.

In some embodiments of the present disclosure, the second information further includes a delay power value respectively corresponding to one or more ports for sending the first RS.

In some embodiments of the present disclosure, the first CDD precoding includes at least one of: the number index of a port corresponding to the first CDD precoding; the cyclic shift of the CDD precoding of a port corresponding to the first CDD precoding; or the cyclic shift ratio of the CDD precoding of a port corresponding to the first CDD precoding.

In some embodiments of the present disclosure, the CDD precoding of the first RS is determined according to a second CDD precoding of a subcarrier at a frequency where the first RS is located.

In some embodiments of the present disclosure, the second CDD precoding satisfies:

$$w_i^{CDD}(k) = e^{-j2\pi m_{cs}^k i},$$

wherein $w_i^{CDD}(k)$ represents a CDD precoding of an i-th subcarrier on a k-th port, $m_{cs}^k$ represents a cyclic shift ratio of the CDD precoding of the k-th port, and $m_{cs}^k < \frac{1}{\Delta i}$, where $j = \sqrt{-1}$, and $\Delta i$ represents a frequency domain density of the first RS.

In some embodiments of the present disclosure, the second CDD precoding satisfies:

$$w_i^{CDD}(k) = e^{-j\frac{2\pi}{N_{FFT}}n_{cs}^k i},$$

wherein $w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \frac{N_{FFT}}{\Delta i}$, where $j = \sqrt{-1}$, and $\Delta i$ represents a frequency domain density of the first RS.

In some embodiments of the present disclosure, the first information is carried in at least one of: an RRC message; an MAC CE; or DCI.

For descriptions of specific examples in the embodiments reference may be made to the corresponding descriptions in the embodiments of FIG. 1 to FIG. 4, and details are not repeated here.

In this embodiment, via the CDD precoding design, the first RS for sending the plurality of candidate beams is precoded, and corresponding configuration information is delivered to the terminal, so that the terminal may simultaneously receive and measure a plurality of candidate beams according to the configuration information, which improves the feedback efficiency of candidate beam measurement and solves the problem of the long feedback time of the candidate beam measurement.

In the embodiments provided by the present disclosure, the method in the embodiments of the present disclosure is described from perspectives of the network device and the terminal, respectively. To perform functions of the method provided in the above embodiments, the network device and the terminal may include a hardware structure and a software module, and realize the above functions with the hardware structure, the software module, or the combination of the hardware structure and the software module. A specific function may be performed as the hardware structure, the software module, or the combination of the hardware structure and the software module.

Corresponding to the communication processing method provided in the above several embodiments, the present disclosure also provides a communication processing apparatus. Since the communication processing apparatus provided in the embodiments of the present disclosure corresponds to the communication processing method provided in the above several embodiments, implementations of the communication processing method are also applicable to the communication processing apparatus provided in the embodiments, which is not described in detail in this embodiment.

FIG. 6 is a block diagram of a network device according to the embodiments of the present disclosure. As shown in FIG. 6, the network device may include: a sending module 51, configured to send first information to a terminal, in which the first information is configured to determine configuration information corresponding to a first RS, and the first RS is an RS based on a CDD precoding.

In some embodiments, the configuration information further includes at least one of: a count of ports for sending the first RS; a number index respectively corresponding to one or more ports for sending the first RS; a cyclic shift of a CDD precoding respectively corresponding to one or more ports for sending the first RS; a cyclic shift ratio of a CDD precoding respectively corresponding to one or more ports for sending the first RS; or a frequency domain density of the first RS.

In some embodiments, the sending module 51 is further configured to: receive second information sent by the terminal; determine a first CDD precoding according to the second information; and send a signal based on the first CDD precoding to communicate with the terminal.

In some embodiments, the second information includes at least one of the following determined by the terminal according to a PDP measurement result of the first RS: the number index of a port whose PDP measurement result meets a preset condition; the cyclic shift of the CDD precoding of a port whose PDP measurement result meets a preset condition; or the cyclic shift ratio of the CDD precoding of a port whose PDP measurement result meets a preset condition.

In some embodiments, the second information further includes a delay power value corresponding to the port whose PDP measurement result meets the preset condition.

In some embodiments, the second information includes at least one of: the number index respectively corresponding to one or more ports for sending the first RS and a corresponding PDP measurement result; the cyclic shift of the CDD precoding respectively corresponding to one or more ports for sending the first RS and a corresponding PDP measurement result; and the cyclic shift ratio of the CDD precoding respectively corresponding to one or more ports for sending the first RS and a corresponding PDP measurement result.

In some embodiments, the second information further includes a delay power value respectively corresponding to one or more ports for sending the first RS.

In some embodiments, the first CDD precoding includes at least one of: the number index of a port corresponding to the first CDD precoding; the cyclic shift of the CDD precoding of a port corresponding to the first CDD precoding; or the cyclic shift ratio of the CDD precoding of a port corresponding to the first CDD precoding.

In some embodiments, the CDD precoding of the first RS is determined according to a second CDD precoding of a subcarrier at a frequency where the first RS is located.

In some embodiments of the present disclosure, the second CDD precoding satisfies:

$$w_i^{CDD}(k) = e^{-j2\pi m_{cs}^k i},$$

wherein $w_i^{CDD}(k)$ represents a CDD precoding of an i-th subcarrier on a k-th port, $m_{cs}^k$ represents a cyclic shift ratio of the CDD precoding of the k-th port, and $m_{cs}^k < \frac{1}{\Delta i}$, where j represents a plural unit, $j = \sqrt{-1}$, and $\Delta i$ represents a frequency domain density of the first RS.

In some embodiments of the present disclosure, the second CDD precoding satisfies:

$$w_i^{CDD}(k) = e^{-j\frac{2\pi}{N_{FFT}}n_{cs}^k i},$$

wherein $w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \frac{N_{FFT}}{\Delta i}$, where j represents a plural unit, $j = \sqrt{-1}$, and $\Delta i$ represents a frequency domain density of the first RS.

In some embodiments, the first information is carried in at least one of: an RRC message; a MAC CE; or DCI.

In this embodiment, via the CDD precoding design, the first RS for sending the plurality of candidate beams is precoded, and corresponding configuration information is delivered to the terminal, so that the terminal may simultaneously receive and measure a plurality of candidate beams according to the configuration information, which improves the feedback efficiency of candidate beam measurement and solves the problem of the long feedback time of the candidate beam measurement.

FIG. 7 is a block diagram of a terminal according to the embodiments of the present disclosure. As shown in FIG. 7, the terminal may include: a receiving module 61, configured to: receive first information sent by a network device; and determine configuration information corresponding to a first RS according to the first information, in which the first RS is an RS based on a CDD precoding.

In some embodiments, the configuration information further includes at least one of: a count of ports for sending the first RS; a number index respectively corresponding to one or more ports for sending the first RS; a cyclic shift of a CDD precoding respectively corresponding to one or more ports for sending the first RS; a cyclic shift ratio of a CDD precoding respectively corresponding to one or more ports for sending the first RS; or a frequency domain density of the first RS.

In some embodiments, the receiving module 61 is further configured to: send second information to the network device, in which the second information is configured to determine a first CDD precoding; and receive a signal sent by the network device based on the first CDD precoding.

In some embodiments of the present disclosure, the second information includes at least one of the following determined by the terminal according to a PDP measurement result of the first RS: the number index of a port whose PDP measurement result meets a preset condition; the cyclic shift of the CDD precoding of a port whose PDP measurement result meets a preset condition; or the cyclic shift ratio of the CDD precoding of a port whose PDP measurement result meets a preset condition.

In some embodiments, the second information further includes a delay power value corresponding to the port whose PDP measurement result meets the preset condition.

In some embodiments, the second information includes at least one of: the number index respectively corresponding to one or more ports for sending the first RS and a corresponding PDP measurement result; the cyclic shift of the CDD precoding respectively corresponding to one or more ports for sending the first RS and a corresponding PDP measurement result; and the cyclic shift ratio of the CDD precoding respectively corresponding to one or more ports for sending the first RS and a corresponding PDP measurement result.

In some embodiments, the second information further includes a delay power value respectively corresponding to one or more ports for sending the first RS.

In some embodiments, the first CDD precoding includes at least one of: the number index of a port corresponding to the first CDD precoding; the cyclic shift of the CDD precoding of a port corresponding to the first CDD precoding; or the cyclic shift ratio of the CDD precoding of a port corresponding to the first CDD precoding.

In some embodiments, the CDD precoding of the first RS is determined according to a second CDD precoding of a subcarrier at a frequency where the first RS is located.

In some embodiments, the second CDD precoding satisfies:

$$w_i^{CDD}(k) = e^{-j2\pi m_{cs}^k i},$$

wherein $w_i^{CDD}(k)$ represents a CDD precoding of an i-th subcarrier on a k-th port, $m_{cs}^k$ represents a cyclic shift ratio of the CDD precoding of the k-th port, and

$m_{cs}^k < \dfrac{1}{\Delta i}$ , where j represents a plural unit, $j = \sqrt{-1}$ , and $\Delta i$ represents a frequency domain density of the first RS.

In some embodiments, the second CDD precoding satisfies:

$$w_i^{CDD}(k) = e^{-j\frac{2\pi}{N_{FFT}} n_{cs}^k i}$$

wherein $w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \dfrac{N_{FFT}}{\Delta i}$ , where j represents a plural unit, $j = \sqrt{-1}$ , and $\Delta i$ represents a frequency domain density of the first RS.

In some embodiments, the first information is carried in at least one of the following signaling: an RRC message; a MAC CE; DCI.

In this embodiment, via the CDD precoding design, the first RS for sending the plurality of candidate beams is precoded, and corresponding configuration information is delivered to the terminal, so that the terminal may simultaneously receive and measure a plurality of candidate beams according to the configuration information, which improves the feedback efficiency of candidate beam measurement and solves the problem of the long feedback time of the candidate beam measurement.

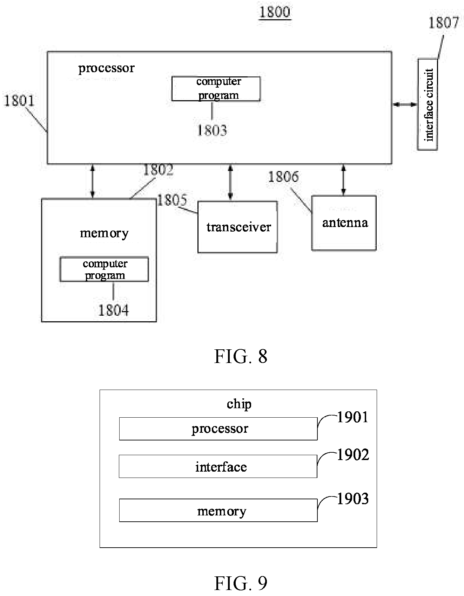

Please refer to FIG. 8, which is a block diagram of a communication apparatus 1800 according to the embodiments of the present disclosure. The communication apparatus 1800 may be a network device, or a UE, or a chip, a chip system, a processor, etc. that supports the network device to implement the method, or a chip, a chip system, a processor, etc. that supports the UE to implement the method. The communication apparatus is configured to implement the method in the above method embodiments. For details, reference may be made to the description in the above method embodiments.

The communication apparatus 1800 may include one or more processors 1801. The processor 1801 may be a general-purpose processor or a special-purpose processor. For example, it may be a baseband processor or a central processing unit. The baseband processor is configured to process communication protocols and communication data, and the central processing unit is configured to control communication apparatuses (such as base stations, baseband chips, terminals, terminal chips, DU or CU, etc.) to execute computer programs and process computer program data.

Optionally, the communication apparatus 1800 may also include one or more memories 1802 on which a computer program 1804 is stored. When the computer program 1804 is executed by the processor 1801, the communication apparatus 1800 implements the method in the above method embodiments. Optionally, the memory 1802 may also store data. The communication apparatus 1800 and the memory 1802 may be set separately or integrated together.

Optionally, the communication apparatus 1800 may also include a transceiver 1805 and an antenna 1806. The transceiver 1805 may be called a transceiving unit, a transceiving machine, or a transceiving circuit, etc., to achieve a transceiving function. The transceiver 1805 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the communication apparatus 1800 may further include one or more interface circuits 1807. The interface circuit 1807 is configured to receive code instructions and transmit the code instructions to the processor 1801. When the code instructions are running on the processor 1801, the communication apparatus 1800 is caused to implement the method in the above method embodiments.

In one implementation, the processor 1801 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit/convey signals.

In one implementation, the processor 1801 may store a computer program 1803. When the computer program 1803 is running on the processor 1801, the communication apparatus 1800 is caused to implement the method in the above method embodiments. The computer program 1803 may be solidified in the processor 1801. In this way, the processor 1801 may be implemented by hardware.

In an implementation, the communication apparatus 1800 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal, but the scope of the communication apparatus in the present disclosure is not limited to this, and the structure of the communication apparatus may not be restricted by FIG. 8. The communication apparatus may be an independent device or part of a larger device. For example, the communication apparatus may be:

(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, reference may be made to FIG. 9, which is a block diagram of a chip according to the embodiments of the present disclosure. The chip in FIG. 9 includes a processor 1901 and an interface 1902. There may be one or more processors 1901, and there may be one or more interfaces 1902.

Optionally, the chip further includes a memory 1903 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

The present disclosure also provides a readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

As used herein, terms "machine-readable medium" and "computer-readable medium" refer to any computer program product, device, and/or apparatus (e.g., magnetic disks, optical disks, memories, programmable logic devices (PLDs)) used to provide machine instructions and/or data to a programmable processor, including a machine-readable medium that receive machine instructions as machine-readable signals. The term "machine-readable signal" refers to any signal used to provide machine instructions and/or data to the programmable processor.

The systems and technologies described herein may be implemented in a computing system that includes background components (e.g., a data server), or a computing system that includes middleware components (e.g., an application server), or a computing system that includes front-end components (e.g., a user computer with a graphical user interface or a web browser, via which the user may interact with the implementations of the systems and technologies described herein), or may include any combination of the background components, the middleware components, and the front-end components. The components of the system may be interconnected by any form or medium of digital data communication (e.g., a communication network). Examples of the communication network include: a local area network (LAN), a wide area network (WAN), and the Internet.

The computer system may include a client and a server. The client and server are generally remote from each other and interacting via a communication network. A relationship between the client and the server is generated by computer programs running on corresponding computers and having a client-server relation with each other.

It may be understood that various forms of processes shown above may be used to reorder, add or delete steps. For example, the steps described in the disclosure could be performed in parallel, sequentially, or in a different order, as long as the desired result of the technical solution disclosed in the disclosure is achieved, which is not limited herein.

Furthermore, it should be understood that various embodiments described in the present disclosure may be implemented independently or in combination with other embodiments when the solution permits.

Those skilled in the related art may realize that, in combination with the examples described in embodiments of the present disclosure, units and algorithm steps may be implemented by electronic hardware or the combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, for the convenience and concise of description, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be included within the protection scope of the present disclosure. Therefore, the protection scope of the present disclosure shall be subject to the protection scope of claims.

## Claims

1. A communication processing method, performed by a network device, comprising:

   sending first information to a terminal, wherein the first information is configured to determine configuration information corresponding to a first reference signal (RS), and the first RS is an RS based on a cyclic delay diversity (CDD) precoding.

2. The communication processing method of claim 1, wherein the configuration information further comprises at least one of:

   a count of ports for sending the first RS; a number index respectively corresponding to one or more ports for sending the first RS; a cyclic shift of a CDD precoding respectively corresponding to one or more ports for sending the first RS; a cyclic shift ratio of a CDD precoding respectively corresponding to one or more ports for sending the first RS; or a frequency domain density of the first RS.

3. The communication processing method of claim 2, further comprising:

   receiving second information sent by the terminal; determining a first CDD precoding according to the second information; and sending a signal based on the first CDD precoding to communicate with the terminal.

4. The communication processing method of claim 3, wherein the second information comprises at least one of the following determined by the terminal according to a power delay profile (PDP) measurement result of the first RS:

   the number index of a port whose PDP measurement result meets a preset condition; the cyclic shift of the CDD precoding of a port whose PDP measurement result meets a preset condition; or the cyclic shift ratio of the CDD precoding of a port whose PDP measurement result meets a preset condition.

5. The communication processing method of claim 4, wherein the second information further comprises a delay power value corresponding to the port whose PDP measurement result meets the preset condition.

6. The communication processing method of claim 3, wherein the second information comprises at least one of the following determined by the terminal according to a PDP measurement result of the first RS:

   the number index respectively corresponding to one or more ports for sending the first RS and a corresponding PDP measurement result; the cyclic shift of the CDD precoding respectively corresponding to one or more ports for sending the first RS and a corresponding PDP measurement result; or the cyclic shift ratio of the CDD precoding respectively corresponding to one or more ports for sending the first RS and a corresponding PDP measurement result.

7. The communication processing method of claim 6, wherein the second information further comprises a delay power value respectively corresponding to one or more ports for sending the first RS.

8. The communication processing method of any one of claims 3 to 7, wherein determining the first CDD precoding according to the second information comprises at least one of:

   determining the number index of a port corresponding to the first CDD precoding; determining the cyclic shift of the CDD precoding of a port corresponding to the first CDD precoding; or determining the cyclic shift ratio of the CDD precoding of a port corresponding to the first CDD precoding.

9. The communication processing method of any one of claims 1 to 8, wherein the CDD precoding of the first RS is determined according to a second CDD precoding of a subcarrier at a frequency where the first RS is located.

10. The communication processing method of claim 9, wherein the second CDD precoding satisfies:

$$w_i^{CDD}(k) = e^{-j2\pi m_{cs}^k i},$$

wherein $w_i^{CDD}(k)$ represents a CDD precoding of an i-th subcarrier on a k-th port, $m_{cs}^k$ represents a cyclic shift ratio of the CDD precoding of the k-th port, and $m_{cs}^k < \frac{1}{\Delta i}$, where j represents a plural unit, $j = \sqrt{-1}$, and $\Delta i$ represents a frequency domain density of the first RS.

**11.** The communication processing method of claim 9, wherein the second CCD precoding satisfies:

$$w_i^{CDD}(k) = e^{-j\frac{2\pi}{N_{FFT}}n_{cs}^k i},$$

wherein $w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \frac{N_{FFT}}{\Delta i}$ , where j represents a plural unit, $j = \sqrt{-1}$ , and $\Delta i$ represents a frequency domain density of the first RS.

**12.** The communication processing method of any one of claims 1 to 11, wherein the first information is carried in at least one of:

> a radio resource control (RRC) message;
> a media access control element (MAC CE); or
> downlink control information (DCI).

**13.** A communication processing method, performed by a terminal, comprising:

> receiving first information sent by a network device; and
> determining configuration information corresponding to a first reference signal (RS) according to the first information, wherein the first RS is an RS based on a cyclic delay diversity (CDD) precoding.

**14.** The communication processing method of claim 13, wherein the configuration information comprises at least one of:

> a count of ports for sending the first RS;
> a number index respectively corresponding to one or more ports for sending the first RS;
> a cyclic shift of a CDD precoding respectively corresponding to one or more ports for sending the first RS;
> a cyclic shift ratio of a CDD precoding respectively corresponding to one or more ports for sending the first RS; or
> a frequency domain density of the first RS.

**15.** The communication processing method of claim 14, further comprising:

> sending second information to the network device, wherein the second information is configured to determine a first CDD precoding; and receiving a signal sent by the network device based on the first CDD precoding.

**16.** The communication processing method of claim 15, wherein the second information comprises at least one of the following determined by the terminal according to a power delay profile (PDP) measurement result of the first RS:

> the number index of a port whose PDP measurement result meets a preset condition;
> the cyclic shift of the CDD precoding of a port whose PDP measurement result meets a preset condition; or
> the cyclic shift ratio of the CDD precoding of a port whose PDP measurement result meets a preset condition.

**17.** The communication processing method of claim 16, wherein the second information further comprises a delay power value corresponding to the port whose PDP measurement result meets the preset condition.

**18.** The communication processing method of claim 15, wherein the second information comprises at least one of the following determined by the terminal according to a PDP measurement result of the first RS:

> the number index respectively corresponding to one or more ports for sending the first RS and a corresponding PDP measurement result;
> the cyclic shift of the CDD precoding respectively corresponding to one or more ports for sending the first RS and a corresponding PDP measurement result; or
> the cyclic shift ratio of the CDD precoding respectively corresponding to one or more ports for sending the first RS and a corresponding PDP measurement result.

**19.** The communication processing method of claim 18, wherein the second information further comprises a delay power value respectively corresponding to one or more ports for sending the first RS.

**20.** The communication processing method of any one of claims 15 to 19, wherein the first CDD precoding comprises at least one of:

> the number index of a port corresponding to the first CDD precoding;
> the cyclic shift of the CDD precoding of a port corresponding to the first CDD precoding; or
> the cyclic shift ratio of the CDD precoding of a port corresponding to the first CDD precoding.

21. The communication processing method of any one of claims 13 to 20, wherein the CDD precoding of the first RS is determined according to a second CDD precoding of a subcarrier at a frequency where the first RS is located.

22. The communication processing method of claim 21, wherein the second CDD precoding satisfies:

$$w_i^{CDD}(k) = e^{-j2\pi m_{cs}^k i},$$

wherein $w_i^{CDD}(k)$ represents a CDD precoding of an i-th subcarrier on a k-th port, $m_{cs}^k$ represents a cyclic shift ratio of the CDD precoding of the k-th port, and $m_{cs}^k < \dfrac{1}{\Delta i}$, where $j = \sqrt{-1}$, and $\Delta i$ represents a frequency domain density of the first RS.

23. The communication processing method of claim 21, wherein the second CDD precoding satisfies:

$$w_i^{CDD}(k) = e^{-j\frac{2\pi}{N_{FFT}} n_{cs}^k i},$$

wherein $w_i^{CDD}(k)$ represents a CDD precoding of an i-th subcarrier on a k-th port, $N_{FFT}$ represents a count of Fourier sampling points, $n_{cs}^k$ represents a cyclic shift of the CDD precoding of the k-th port, and $n_{cs}^k < \dfrac{N_{FFT}}{\Delta i}$, where $j = \sqrt{-1}$, and $\Delta i$ represents a frequency domain density of the first RS.

24. The communication processing method of any one of claims 13 to 23, wherein the first information is carried in at least one of:

   a radio resource control (RRC) message;
   a media access control element (MAC CE); or
   downlink control information (DCI).

25. A network device, comprising:
   a sending module, configured to send first information to a terminal, wherein the first information is configured to determine configuration information corresponding to a first reference signal (RS), and the first RS is an RS based on a cyclic delay diversity (CDD) precoding.

26. A terminal, comprising:
   a receiving module, configured to receive first information sent by a network device; and determine configuration information corresponding to a first reference signal (RS) according to the first information, wherein the first RS is an RS based on a cyclic delay diversity (CDD) precoding.

27. A communication processing system, comprising: a network device and a terminal,

   wherein the network device is configured to implement the communication processing method of any one of claims 1 to 12; and
   the terminal is configured to implement the communication processing method of any one of claims 13 to 24.

28. A communication device, comprising: a transceiver; a memory; and a processor connected to the transceiver and the memory respectively, and configured to control wireless signal transmission and reception of the transceiver by executing computer-executable instructions on the memory, and implement the communication processing method of any one of claims 1 to 24.

29. A computer-readable storage medium for storing computer-executable instructions that, when executed by a processor, cause the processor to implement the communication processing method of any one of claims 1 to 24.

11

FIG. 1

| network device | | terminal |
|---|---|---|

At S201, the network device sends first information to the terminal.

At S202, the network device receives second information sent by the terminal and determines a first CDD precoding according to the second information.

At S203, the network device sends a signal based on the first CDD precoding to communicate with the terminal.

FIG. 2

FIG. 3

The network device sends first information to the terminal.  301

FIG. 4

The terminal receives first information sent by the network device.  401

The terminal determines configuration information corresponding to a first RS according to the first information.  402

FIG. 5

network device

sending module  51

FIG. 6

terminal

receiving module  61

FIG. 7

FIG. 8

FIG. 9

## INTERNATIONAL SEARCH REPORT

| International application No. |
| --- |
| **PCT/CN2023/119158** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, ENTXT, 3GPP: 参考信号, 配置, 时延功率分布, 循环延迟分集, Reference Signal, RS, CDD, PDP

### C. DOCUMENTS CONSIDERED TO BE RELEVANT

| Category* | Citation of document, with indication, where appropriate, of the relevant passages | Relevant to claim No. |
| --- | --- | --- |
| X | CN 112703697 A (QUALCOMM INC.) 23 April 2021 (2021-04-23) description, paragraphs 10-11, 47, and 60 | 1-3, 12-15, 24-29 |
| A | CN 102246429 A (LG ELECTRONICS INC.) 16 November 2011 (2011-11-16) entire document | 1-29 |
| A | CN 109565312 A (QUALCOMM INC.) 02 April 2019 (2019-04-02) entire document | 1-29 |
| A | US 2012257575 A1 (DAVYDOV, A. et al.) 11 October 2012 (2012-10-11) entire document | 1-29 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 May 2024** | **15 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119158**

| Patent document cited in search report | | | Publication date (day/month/year) | Patent family member(s) | | | Publication date (day/month/year) |
|---|---|---|---|---|---|---|---|
| CN | 112703697 | A | 23 April 2021 | EP | 4027568 | A1 | 13 July 2022 |
| | | | | WO | 2020061467 | A2 | 26 March 2020 |
| | | | | SG | 11202101418 | VA | 29 April 2021 |
| | | | | US | 2020099490 | A1 | 26 March 2020 |
| | | | | TW | 202025647 | A | 01 July 2020 |
| | | | | EP | 3854020 | A2 | 28 July 2021 |
| | | | | IN | 202127006076 | A | 26 March 2021 |
| CN | 102246429 | A | 16 November 2011 | US | 2011200143 | A1 | 18 August 2011 |
| | | | | WO | 2010044555 | A2 | 22 April 2010 |
| | | | | EP | 2346190 | A2 | 20 July 2011 |
| | | | | JP | 2012506193 | A | 08 March 2012 |
| | | | | KR | 20100042210 | A | 23 April 2010 |
| CN | 109565312 | A | 02 April 2019 | US | 2018048365 | A1 | 15 February 2018 |
| | | | | WO | 2018031124 | A1 | 15 February 2018 |
| | | | | EP | 3497810 | A1 | 19 June 2019 |
| US | 2012257575 | A1 | 11 October 2012 | US | 2013286997 | A1 | 31 October 2013 |
| | | | | US | 2013288728 | A1 | 31 October 2013 |
| | | | | US | 2014016714 | A1 | 16 January 2014 |
| | | | | WO | 2012108912 | A1 | 16 August 2012 |
| | | | | WO | 2012108913 | A1 | 16 August 2012 |
| | | | | WO | 2012108928 | A1 | 16 August 2012 |
| | | | | EP | 2673891 | A1 | 18 December 2013 |
| | | | | EP | 2673890 | A1 | 18 December 2013 |
| | | | | EP | 2673892 | A1 | 18 December 2013 |
| | | | | CN | 103430459 | A | 04 December 2013 |
| | | | | CN | 103444095 | A | 11 December 2013 |
| | | | | CN | 103460618 | A | 18 December 2013 |

Form PCT/ISA/210 (patent family annex) (July 2022)